# Europäisches Patentamt
## European Patent Office
## Office européen des brevets

(19)

(11) Veröffentlichungsnummer: **0 163 001**
**A2**

(12) # EUROPÄISCHE PATENTANMELDUNG

(21) Anmeldenummer: **85100682.5**

(22) Anmeldetag: **24.01.85**

(51) Int. Cl.⁴: **B 01 D 53/36**

(30) Priorität: **02.03.84 DE 3407759**

(43) Veröffentlichungstag der Anmeldung:
**04.12.85 Patentblatt 85/49**

(84) Benannte Vertragsstaaten:
**AT BE CH DE FR GB IT LI LU NL SE**

(71) Anmelder: **Uhde GmbH**
**Friedrich-Uhde-Strasse 15 Postfach 262**
**D-4600 Dortmund 1(DE)**

(72) Erfinder: **Buchenau, Rolf, Dipl.-Ing.**
**Rathenaustrasse 6**
**D-4600 Dortmund 1(DE)**

(72) Erfinder: **Wolstein, Friedrich, Dr., Dipl.-Ing.**
**Goethe-Strasse 66**
**D-4300 Essen(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) **Vorrichtung zur Verminderung des NO X-Gehaltes in Abgasen.**

(57) Bei einer Vorrichtung zur Verminderung des $NO_x$-Gehaltes in Abgasen aus mittels fossiler Brennstoffe betriebenen Kraftwerken unter Einsatz eines Edelmetallkatalysators im Abgasstrom soll eine Lösung geschaffen werden, mit der die Verminderung des $NO_x$-Gehaltes bei Abgastemperaturen von weniger als 200°C erfolgen kann und wobei das Zusetzen des Katalysators auch bei diesen niedrigen Temperaturen verhindert oder rückgängig gemacht wird sowie die Lebensdauer und die Handhabung des Katalysators verbessert wird. Dies wird dadurch erreicht, daß zum Vorwärmen des Katalysators (3) eine Heizeinrichtung (7) vorgesehen ist.

./...

Croydon Printing Company Ltd

Fig.2

Die Erfindung betrifft eine Vorrichtung zur Verminderung des $NO_x$-Gehaltes in Abgasen aus mittels fossiler Brennstoffe betriebenen Kraftwerken unter Einsatz eines Edelmetallkatalysators im Abgasstrom.

Behandlung von Abgasen durch Katalysatoren ist bekannt. In der Regel wird diese Behandlung bei Temperaturen oberhalb $300^\circ$ C durchgeführt. Die Erfindung betrifft eine Abgasbehandlung bei niedrigen Temperaturen, d.h. bei Temperaturen von weniger als $200^\circ$ C, insbesondere im Bereich von $130^\circ$ C.

Bei diesem Temperaturbereich besteht die Gefahr insbesondere beim Anfahren und Abschalten der Anlage, d.h. beim Aufwärmen und Abkühlen des Katalysators, daß die Temperaturen den Taupunkt der Rauchgase durchlaufen, so daß sich Kondensat bildet und sich an dem Katalysator abscheidet. Mit den im Abgas befindlichen Ballaststoffen, insbesondere Staubpartikeln, bildet dieses Kondensat eine Schmiere, wodurch sich der Katalysator zusetzt.

Aufgabe der Erfindung ist die Schaffung einer Lösung, mit der die Verminderung des $NO_x$-Gehaltes bei Abgastemperaturen von weniger als $200^\circ$ C erfolgen kann und wobei das Zusetzen des Katalysators auch bei diesen niedrigen Temperaturen verhindert oder rückgängig gemacht sowie die Lebensdauer und die Handhabung des Katalysators verbessert wird.

Da es eine Mehrzahl von Lösungsmöglichkeiten gibt, die alle die vorgenannte Aufgabe lösen, sieht die Erfindung auch eine Mehrzahl derartiger Gestaltungsmöglichkeiten vor, die entweder für sich alleine oder auch in Kombination in der Praxis einsetzbar sind.

Bei einer Vorrichtung der eingangs bezeichneten Art wird diese Aufgabe gemäß der Erfindung einzeln oder in Kombination dadurch gelöst, daß

- zum Vorwärmen des Katalysators eine Heizeinrichtung und/oder

- im Eingangsbereich des Katalysators Rußbläser und/oder

- ein Katalysator aus einzelnen quer zur Abgasströmungsrichtung verschiebbaren Katalysatorregistern und/oder

- wenigstens ein Katalysatorregister aus mehreren Etagen von im Betrieb auswechselbaren Katalysatorpaketen und/oder

- ein Katalysator mit einer Bemessung zur Aufrechterhaltung einer Strömungsgeschwindigkeit von 2 - 12 m/sec. im

0163001

Katalysator vorgesehen ist/sind.

Durch die erfindungsgemäßen Maßnahmen läßt sich das Zusetzen des Katalysators im wesentlichen verhindern. Da nicht ausgeschlossen werden kann, daß es z. B. bei teilweisem Ausfall von gewissen Anlageteilen, wie z.B. der Heizeinrichtung, zur Verschmutzung, zum Zusetzen und zum Zubacken des Katalysators, insbesondere in deren Eingangsbereichen kommen kann, sehen die anderen Lösungsmöglichkeiten eine Befreiung der Katalysatoroberfläche auch für diesen Fall vor.

Die einzelnen Lösungsmöglichkeiten zeichnen sich auch durch spezielle zweckmäßige Ausgestaltungen aus, die Gegenstand von Unteransprüchen sind.

So kann die Heizeinrichtung zum Vorwärmen des Katalysators erfindungsgemäß mittels Heißluft oder überhitztem Dampf oder elektrischer Energie betrieben sein.

Der oder die im Eingangsbereich des Katalysators vorgesehenen Rußbläser können auch dann vorgesehen sein, wenn der Katalysator in einzelne Züge oder Register aufgeteilt ist, wobei in diesem Fall jedem Register ein oder mehrere Rußbläser zugeordnet sind.

0163001

Wesentlich für die Erfindung ist auch die Austauschbarkeit einzelner Katalysatorregister oder einzelner Etagen eines Katalysators und zwar während des Betriebes, so daß Betriebsstörungen verhindert werden.

Hierbei kann z.B. der Katalysator, wenn er aus einzelnen Katalysatorregistern besteht, so im Abgasstrom angeordnet sein, daß in einer Reihe mehrere Register hintereinander stehen, die quer zur Strömungsrichtung durch den Abgaskanal verfahrbar sind, d.h. die Katalysatorregister sind von einer Seite in den Abgaskanal einschiebbar und auf der anderen Seite entnehmbar. Diese Konstruktion hat einige Vorteile.

Es ist erfindungsgemäß vorgesehen, daß die Katalysatorregister auf einer Rollenbahn angeordnet sind. Am Eintritt der Rollenbahn in den Abgasströmungskanal kann ebenso wie am Austritt ein Sperrschieber angeordnet sein, um die Leckverluste auf ein Mindestmaß zu reduzieren. Diese Sperrschieber ermöglichen aber auch das Vorsehen einer Vorwärmschleuse mit einer Heizeinrichtung für ein neu einzuschiebendes Katalysatorregister ebenso wie eine Abkühl- und Entstaubungsschleuse am Austritt der Katalysatorregister aus dem Abgaskanal.

In einer anderen Gestaltungsvariante sieht die Erfindung vor, daß der Katalysator aus mehreren Etagen von Katalysa-

0163001

torpaketen besteht, die während des Betriebes durch eine
schubladenartige Gestaltung ein- und ausschiebbar sind.
Diese Konstruktion ermöglicht es z.B., dem Katalysator eine Bauweise zu geben, die der für die Reaktion notwendigen
Kontaktlänge des Katalysators entspricht und ihm ein vorgeschaltetes Katalysatorpaket zuzuordnen, welches zunächst
den größten Teil der Ballaststoffe in den Abgasen abfängt,
soweit diese nicht den gesamten Katalysator durchströmen.
Die Eintrittsbereiche der Katalysatoren sind in der Regel
die gefährdetsten, was das Zusetzen betrifft, so daß z.B.
bei dieser Gestaltung das vorgeschaltete Katalysatorkpaket
während des Betriebes kurzfristig zum Reinigen ausgetauscht werden kann, daher wird es einfach ausgezogen und
durch ein gereinigtes Katalysatorpaket ersetzt.

Um ggf. dieses Auswechseln nicht mit dem zwischen dem Abgaskanal und der Umgebung herrschenden Druckdifferenzen
durchführen zu müssen, sieht die Erfindung auch vor, daß
ein zusätzliches Register im Abgasstrom vorgesehen ist,
welches von der Auslegung des Katalysators selbst dort hätte nicht vorgesehen werden müssen. Dieses Register ermöglicht es, jeweils die benötigte Anzahl von Registern in
den Abgasstrom einzuschalten um das jeweilige Register zu
reinigen.

Eine weitere Maßnahme, bei den angestrebten niedrigen Behandlungstemperaturen der Abgase zur Verminderung des

$NO_x$-Gehaltes besteht darin, eine Strömungsgeschwindigkeit bzw. eine Raumgeschwindigkeit und eine diesen Werten zugeordnete Baulänge des Katalysators vorzusehen, die beim Durchströmen der mit Ballaststoffen, insbesondere Staubpartikeln, versehenen Abgase die gestellte Aufgabe lösen können. Die entsprechenden Werte sind in den Unteransprüchen angegeben. So beträgt die Strömungsgeschwindigkeit 2 - 12 m/sec., die Raumgeschwindigkeit 5000 - 30000 $h^{-1}$ und die Länge eines Katalysatorkörpers zwischen 0,1 und 1,0 m.

Die Erfindung ist nachstehend anhand der Zeichnung beispielsweise näher erläutert. Diese zeigt in

Fig. 1 ein Schaltschaubild eines in einem Abgasstrom angeordneten Katalysators in Etagenbauweise mit einer Vorheizeinrichtung,

Fig. 2 die Gestaltung eines Katalysators aus quer zur Abgasströmungsrichtung auf Rollenbahnen verschiebbaren Katalysatorregistern sowie in

Fig. 3 die Gestaltung eines Katalysators aus mehreren Registern mit schubladenartig entnehmbaren Katalysatorpaketen.

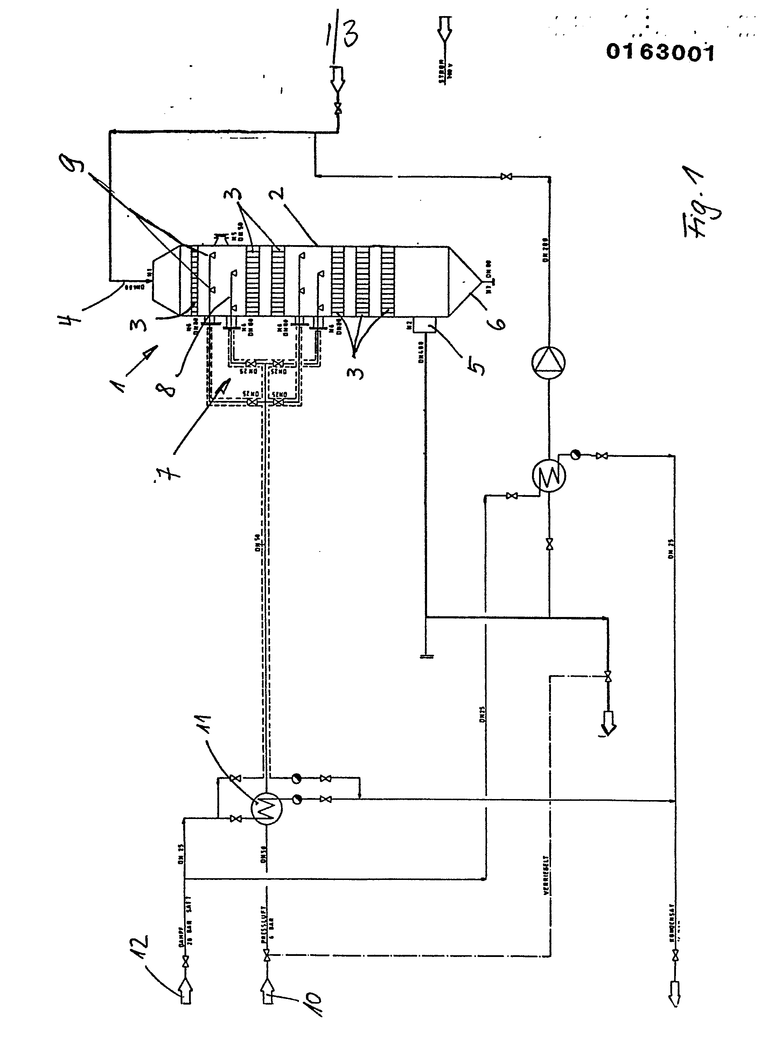

Die in den Figuren allgemein mit 1 bezeichnete Vorrichtung zur Verminderung des $NO_x$-Gehaltes in den Abgasen ist in Fig. 1 lediglich symbolisch wiedergegeben. In einem Gehäuse 2 sind Katalysatorpakete 3 in Schwerkraftsrichtung übereinander angeordnet. Am oberen Ende des Gehäuses 2 ist der Eintritt 4 des Abgasstromes, im unteren Randbereich des Gehäuses 2 ist seitlich der Austritt 5 des Abgasstromes.

An seinem unteren Ende weist das Gehäuse 2 einen Aschenabzugstrichter 6 auf.

Wesentlich für das in Fig. 1 dargestellte Vorwärmkonzept des Katalysators 3 ist eine allgemein mit 7 bezeichnete Heizeinrichtung. Diese Heizeinrichtung 7 ist im dargestellten Fall als heißluftbetriebene Heizung 8 ausgebildet. Die in Fig. 1 von links mit dem Pfeil 10 bezeichnete Luft wird über einen Wärmetauscher 11 geleitet, der mit überhitztem Dampf, dargestellt durch den Pfeil 12, beheizt ist.

Die Heizung 8 weist zu- und abschaltbare Düsen 9 auf, die gleichzeitig als Rußbläser ausgebildet sein können.

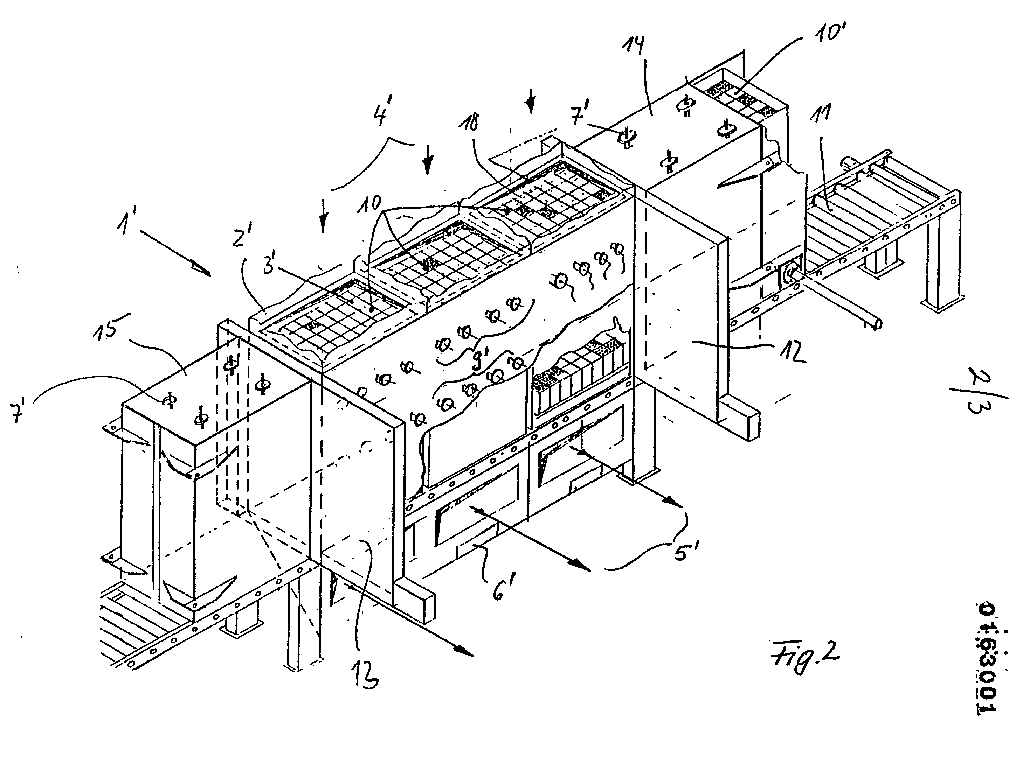

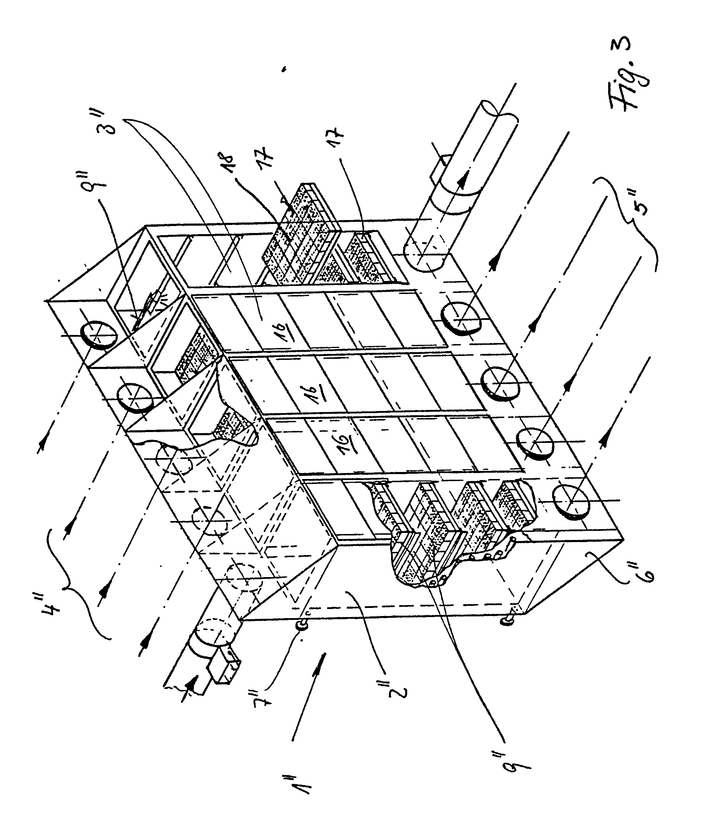

In den Fig. 2 und 3 sind diejenigen Elemente, die mit den Elementen der Fig. 1 im schematischen Schaubild übereinstimmen, mit den gleichen Bezugsziffern versehen. Allerdings einfach gestrichen in Fig. 2 und zweifach gestrichen in Fig. 3.

Die Fig. 2 zeigt eine Vorrichtung 1´, bei der der Katalysator 3´ aus im dargestellten Beispiel drei Katalysatorregistern 10 gebildet ist. Diese Katalysatorregister 10 sind im Abgasstrom, dessen Strömungsrichtung mit den Pfeilen 4´ im Eintritt und 5´ im Austritt bezeichnet ist, hintereinander vorgesehen. Die Katalysatorregister 10 sind auf einer Rollenbahn 11 angeordnet, die von einer Seite in den Abgaskanal eintritt, diesen durchsetzt und auf der anderen Seite wieder austritt. Ein- und Austritt sind jeweils über Sperrschieber 12 bzw. 13 gesichert. Im Bereich des Eintrittes am Sperrschieber 12 ist an der Rollenbahn eine Vorwärmschleuse 14 mit einer Heizeinrichtung 7´ vorgesehen. Am Austritt der Rollenbahn ist eine Abkühlung der Entstaubungsschleuse 15 angeordnet. Die den Registern zugeordneten Rußbläser sind im Fall der Fig. 2 mit 9´ bezeichnet.

Zum Reinigen bzw. Auswechseln von Katalysatorregistern 10 wird z.B. ein frisches Katalysatorregister 10´ in die Vorwärmschleuse 14 eingeschoben und die Schleusentore geschlossen. Unterstellt, in der Entstaubungsschleuse 15 befindet sich kein Katalysatorregister, so sind auch die dortigen Schleusentore geschlossen.

Nun wird das Katalysatorregister 10´ über die Heizeinrichtung 7´ erhitzt und auf eine Temperatur gebracht, die im wesentlichen derjenigen entspricht, die im Abgaskanal herrscht. Die im Abgaskanal herrschenden Druck- und Temperaturverhältnisse werden auch in der Entstaubungsschleuse 15 erzeugt. Nunmehr werden die Sperrschieber 12 und 13 geöffnet und das Katalysatorregister 10´ in den Abgaskanal eingeschoben. Gleichzeitig wird das in Fig. 2 linke Katalysatorregister in die Schleuse 15 eingeschoben. Nunmehr werden die Sperrschieber 12 und 13 geschlossen und die Behandlung des in der Schleuse 15 befindlichen Katalysatorregisters kann beginnen. Erkennbar wird bei dieser Verfahrensweise der Betrieb der Anlage in keiner Weise gestört.

In Fig. 3 ist eine andere Bauart dargestellt. Im dort dargestellten Beispiel besteht der Katalysator 3" aus fünf Katalysatorregistern 16, die ihrerseits jeweils aus mehreren Etagen von Katalysatorpaketen 17 gebildet sind.

Die Auslegung des Katalysators 3" im Falle der Fig. 3 ist so gewählt, daß jeweils vier Katalysatorregister ausreichen, um den Gesamtdurchsatz an Abgas zu bewältigen, d.h. ein Katalysatorenregister ist jeweils abschaltbar.

Jedes Register 16 ist mit einer Heizeinrichtung 7" und Rußbläsern 9" versehen, der Rußsammeltrichter, in Schwerkraftsrichtung unten liegend, ist in Fig. 3 mit 6" bezeichnet.

Soll ein Katalysator ausgewechselt oder gereinigt werden, so wird im Fall der Fig. 3 das entsprechend zu behandelnde

Katalysatorregister 16 abgeschaltet und ein frisches Register zugeschaltet. Dabei können, wie im Fall der Fig. 2, vorab in dem entsprechenden Register durch die Heizeinrichtung u. dgl. diejenigen Zustände erreicht werden, die im Abgas herrschen, d.h. insbesondere die dortigen Temperaturverhältnisse, bevor das Abgas dieses Register beaufschlagt. Zum Reinigen, Auswechseln oder Behandeln können dann, wie in Fig. 3 dargestellt, schubladenartig die Katalysatorpakete 17 entnommen und behandelt oder ausgetauscht werden.

Mit 18 soll in den Fig. 2 und 3 der Katalysatorträger bezeichnet sein, der im wesentlichen aus $SiO_2\text{-}Al_2O_3$ besteht und mit Edelmetallverbindungen beschichtet ist.

Natürlich sind die beschriebenen Ausführungsbeispiele der Erfindung noch in vielfacher Hinsicht abzuändern, ohne den Grundgedanken zu verlassen. So ist die Erfindung insbesondere nicht auf die dargestellten räumlichen Gestaltungen der Vorrichtung beschränkt. Hier können, je nach Art des Abgas- bzw. Rauchgaskanales, die konstruktiven Merkmale des Katalysators einschl. der Registergestaltung anders vorgenommen werden. Bei runden Querschnitten können z. B. die Katalysatorregister als Kreissegmente ausgebildet sein und über ein Karussell einer entsprechenden Schleuse zugeführt werden u. dgl. mehr.

Ansprüche :

1. Vorrichtung zur Verminderung des $NO_x$-Gehaltes in Abgasen aus mittels fossiler Brennstoffe betriebenen Kraftwerken unter Einsatz eines Edelmetallkatalysators im Abgasstrom,

   dadurch gekennzeichnet, daß

   zum Vorwärmen des Katalysators (3) eine Heizeinrichtung (7) vorgesehen ist.

2. Vorrichtung nach Anspruch 1,

   dadurch gekennzeichnet,

   daß die Heizeinrichtung (7) als heißluftbetriebene und/oder als von überhitztem Dampf betriebene Heizeinrichtung (8) und/oder als Elektroheizung ausgebildet ist.

3. Vorrichtung zur Verminderung des $NO_x$-Gehaltes in Abgasen aus mittels fossiler Brennstoffe betriebenen Kraftwerken unter Einsatz eines Edelmetallkatalysators im Abgasstrom insbesondere nach Anspruch 1 oder 2,

   dadurch gekennzeichnet, daß

   im Eingangsbereich des Katalysators Rußbläser (9) vorgesehen sind.

4. Vorrichtung nach Anspruch 3,

   dadurch gekennzeichnet,

   daß der Katalysator (3´ bzw. 3") in einzelne Katalysatorregister (10) aufgeteilt und jedes Register mit eigenen Rußbläsern ausgerüstet ist.

5. Vorrichtung zur Verminderung des $NO_x$-Gehaltes in Abgasen aus mittels fossiler Brennstoffe betriebenen Kraftwerken unter Einsatz eines Edelmetallkatalysators im Abgasstrom,

dadurch gekennzeichnet,

daß ein Katalysator (3´) aus einzelnen quer zur Abgasströmungsrichtung verschiebbaren Katalysatorregistern (10) vorgesehen ist.

6. Vorrichtung nach Anspruch 7,

dadurch gekennzeichnet,

daß die Katalysatorregister (10) auf einer Rollenbahn (11)
zur Verschiebung quer zur Durchströmungsrichtung angeordnet sind, wobei insbesondere am Eintritt der Rollenbahn
(11) in den Abgasströmungskanal und am Austritt jeweils
Sperrschieber (12 bzw. 13) angeordnet sind.

7. Vorrichtung nach Anspruch 6,

dadurch gekennzeichnet,

daß wenigstens am Eingang zum Abgaskanal eine Vorwärmschleuse (14) mit einer Heizeinrichtung (7´) für ein neu
einzuschiebendes Katalysatorregister (10´) und/oder am Austritt der zu reinigenden Katalysatorregister eine Abkühl-
und Entstaubungsschleuse (15) vorgesehen ist.

8. Vorrichtung zur Verminderung des $NO_x$-Gehaltes in Abgasen aus mittels fossilier Brennstoffe betriebenen Kraftwerken unter Einsatz eines Edelmetallkatalysators im Abgasstrom,

dadurch gekennzeichnet,

daß wenigstens ein Katalysatorregister (16) aus mehreren Etagen von im Betrieb auswechselbaren Katalysatorpaketen (17) vorgesehen ist.

9. Vorrichtung nach Anspruch 8,

dadurch gekennzeichnet,

daß im Abgaskanal wenigstens ein zusätzliches Katalysatorregister (16) zum Ab- und Aufschalten einzelner Register ohne Verlust am wirksamen Durchströmquerschnitt und/oder in jedem Register (16) die einzelnen Katalysatorpakete (17) schubladenartig zum Auswechseln ein- und ausschiebbar sind.

10. Vorrichtung zur Verminderung des $NO_x$-Gehaltes in Abgasen aus mittels fossiler Brennstoffe betriebenen Kraftwerken unter Einsatz eines Edelmetallkatalysators im Abgasstrom,

dadurch gekennzeichnet,

daß ein Katalysator (3) mit einer Bemessung zur Aufrechterhaltung einer Strömungsgeschwindigkeit von 2 bis 12 m/sec im Katalysator und/oder zur Aufrechterhaltung einer Raumge-

schwindigkeit von 5 000 bis 30 000 $h^{-1}$, insbesondere 10 000 $h^{-1}$ vorgesehen ist.

11. Vorrichtung nach Anspruch 10,

dadurch gekennzeichnet,

daß die Länge des wabenförmig ausgebildeten Katalysatorkörpers (3) entsprechend der Raumgeschwindigkeit zwischen 0,1 und 1,0 m beträgt.

12. Vorrichtung nach einem der vorangehenden Ansprüche,

dadurch gekennzeichnet,

daß in Schwerkraftrichtung unter dem oder den Katalysatorregistern wenigstens eine Staubpartikelsammeleinrichtung (6) angeordnet ist.

0163001

Fig. 1

Fig.2

0163001

Fig. 3